(19) Europäisches Patentamt European Patent Office Office européen des brevets

(11) **EP 1 895 620 B1**

(12) **EUROPEAN PATENT SPECIFICATION**

(45) Date of publication and mention of the grant of the patent:
**12.10.2011 Bulletin 2011/41**

(51) Int Cl.:
*H01Q 9/26* (2006.01)   *G06K 19/07* (2006.01)
*G06K 19/077* (2006.01)   *H01Q 1/22* (2006.01)
*H01Q 1/38* (2006.01)

(21) Application number: **05751570.2**

(22) Date of filing: **16.06.2005**

(86) International application number:
**PCT/JP2005/011074**

(87) International publication number:
**WO 2006/134658 (21.12.2006 Gazette 2006/51)**

(54) **RFID TAG ANTENNA AND RFID TAG**

RFID-ETIKETTENANTENNE UND RFID-ETIKETT

ANTENNE D ÉTIQUETTE RFID ET ÉTIQUETTE RFID

(84) Designated Contracting States:
**DE FR GB**

(43) Date of publication of application:
**05.03.2008 Bulletin 2008/10**

(73) Proprietor: **FUJITSU LIMITED**
**Kawasaki-shi,**
**Kanagawa 211-8588 (JP)**

(72) Inventors:
• **KAI, Manabu,**
**c/o FUJITSU LIMITED**
**Kawasaki-shi,**
**Kanagawa 2118588 (JP)**
• **MANIWA, Toru,**
**c/o FUJITSU LIMITED**
**Kawasaki-shi,**
**Kanagawa 2118588 (JP)**

• **YAMAGAJO, Takashi,**
**c/o FUJITSU LIMITED**
**Kawasaki-shi,**
**Kanagawa 2118588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(56) References cited:
WO-A-03/044892   WO-A-2005/048476
GB-A- 1 149 569   JP-A- 5 110 329
JP-A- 2002 271 129   JP-A- 2002 298 106
JP-A- 2003 087 044   JP-A- 2003 110 329
US-A- 5 402 136   US-A1- 2002 126 049
US-A1- 2004 021 608   US-A1- 2004 178 912
US-B1- 6 563 191

## Description

## Technical Field

The present invention relates to an antenna technique, and in particular to a technique suitable to an application in an RFID system for reducing a body existing in the surrounding area influencing a performance of the antenna.

## Background Art

Known is a system called a Radio Frequency Identification (RFID) system transmitting a signal of approximately one watt from a reader/writer by using a radio signal of the UHF band (860 to 960 MHz) and sending a response signal back to the reader/writer when receiving the signal at a tag side, thereby reading information stored in the tag. A communication distance of the system is about three meters although it depends on an antenna gain on the tag side, an operating voltage of an integrated circuit (IC) chip of the tag and an environmental condition.

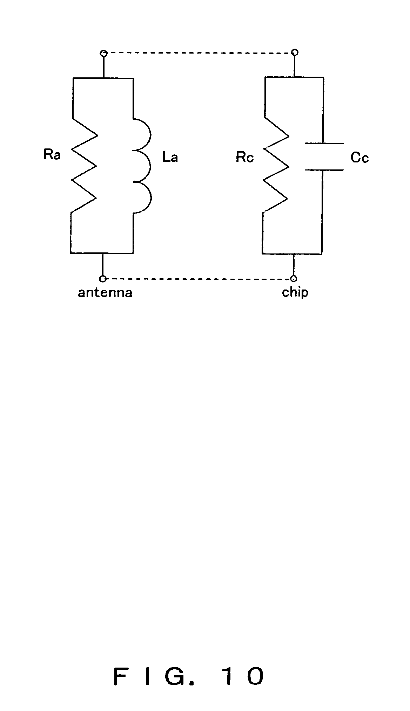

An RFID tag is generally constituted by an antenna of an approximate thickness of 10 to 30 micrometers and by an IC chip connected to a feed point of the antenna. The IC chip can generally be expressed equivalently by a parallel connection between a resistor Rc (e.g., 1200 ohms) and a capacitance Cc (e.g., 0.58 pF), and the antenna can be expressed equivalently by a parallel connection between a resistor Ra (e.g., 1000 ohms) and an inductance La (e.g., 48 nH). A parallel connection between the two (i.e., the IC chip and antenna) constitutes a circuit as shown in Fig. 10. Here, the two matches at a resonance frequency f0 expressed by the following expression where the capacitance Cc and inductance La resonate;

[Expression 1]

$$f0 = \frac{1}{2\pi\sqrt{LC}}$$

and therefore, when the resonance frequency is received by the antenna, its reception power is adequately supplied to the IC chip side.

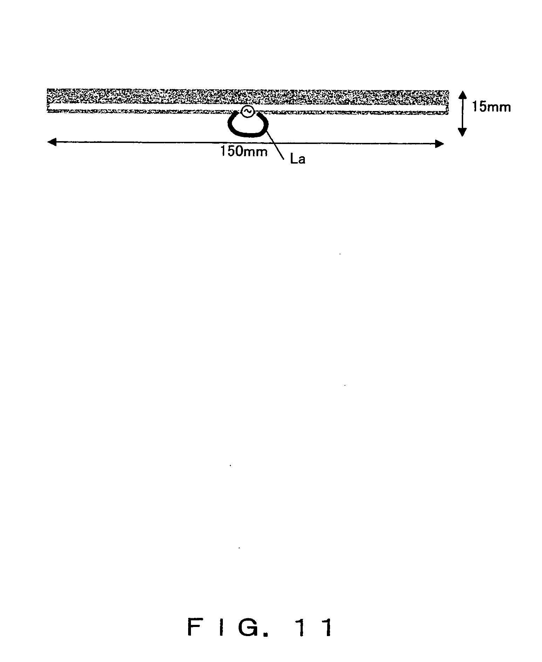

As a basic antenna used for a tag antenna, a folded dipole antenna 100 of a total length of 150 mm and a width of 15 mm, both approximately, for example, as shown in Fig. 11. A gain of the antenna 100 is approximately 2 dBi. The total length is one half of the wavelength of f= 953 MHz (i.e. , approximately 300 mm) and the antenna resonates at the aforementioned frequency by having a current distribution of λ/2. The imaginary component of an admittance (i.e., the inductance components and the capacitance components) of the folded dipole antenna 100 is zero ("0") at the resonance frequency and therefore a parallel connection of the inductance part La to the folded dipole antenna 100 makes it possible to resonate with the IC chip.

As a technique related to the present invention in addition to the above described, a reference patent document 1, as an example, has disclosed a technique comprising reflection means reflecting an electromagnetic wave toward an antenna for a noncontact IC tag, thereby extending a communication distance and also maintaining a state of reading and writing data regardless of a material existing in the rear.

If an article to which an RFID tag is to be attached is made of a metal, and if the antenna is adhesively attached to a surface of the metal, there is a risk of the communication with a reader/writer becoming impossible due to a phenomena of a shift in a resonance frequency and of a reduced antenna gain as a result of an unwanted high frequency current flowing on the surface of the aforementioned metallic surface.

The technique disclosed in the above noted patent document 1 is effective to reducing such a variation of antenna characteristic. The antenna used for the noncontact IC tag disclosed in the aforementioned reference document, however, is a folded dipole antenna. Moreover, the reflection means and antenna need to be placed with a substantial distance between them (i.e., at least 1/12 wavelength according to the reference document) in order to reflect a magnetic wave emitted from the antenna. Therefore an application of the technique to an RFID tag system using a signal of the UHF band results in making the form of an RFID tag long and large sized. Patent document 1: Laid-Open Japanese Patent Application Publication No. 2002-298106

Document US 2004/0021608 discloses an antenne as set out in the preamble of claim 1.

## Disclosure of Invention

## Technical Problem

In consideration of the problem described above, the problem for the present invention is to miniaturize an RFID tag usable by adhesively attaching to a metallic surface.

## Technical Solution

An RFID tag antenna according to one of the aspects of the present invention solves the above noted problem by comprising a first element constituted by a pair of conductors each of which has only one turn of bent part and in each of which one edge part is a power feeding point; a capacitance coupler part formed between the power feeding points; and a second element which is a conductor placed opposite to the first element by sandwiching a dielectric body, and having a line width greater than the line width of the first element.

In the antenna configured as such, the bending of the first element makes the overall length of the antenna shorter than that of a folded dipole antenna, the second element reduces the variation of the antenna characteristic due to being adhesively attached to a metallic surface, and an equipment of the capacitance coupler unit makes it possible to utilize in a desired frequency.

The RFID tag antenna according to the present invention may be configured such that a bending angle of the bent part is a right angle.

This configuration makes it possible to make the form of the entirety of an antenna smaller than a case of configuring the bending angle to be obtuse.

The RFID tag antenna according to the present invention may also be configured such that the second element is formed by contouring along a form of the first element.

This configuration reduces a degradation of an antenna gain under an influence of the second element.

The RFID tag antenna according to the present invention may also be configured such that the capacitance coupler unit is parallel conductors featured at a power feeding point of the first element.

This configuration makes it possible to form the capacitance coupler unit in low cost.

Also in this case, the configuration may further comprise a second dielectric body placed opposite to the dielectric body by sandwiching the parallel conductors.

Also in this case, the configuration may further comprise a second dielectric body which is placed in a part of the dielectric body contacting with the parallel conductors and which has a higher relative permittivity than that of the aforementioned dielectric body.

This configuration makes it possible to shorten the parallel conductors, resulting in improving an antenna gain.

The RFID tag antenna according to the present invention may also be configured such that the first and second elements each is a conductor pattern formed on a sheet and the dielectric body of a sheet form is sandwiched by the aforementioned sheets.

This configuration enables a production of the RFID tag antenna according to the present invention.

Also in this case, the sheet may be made of either of polyethylene terephthalate (PET), paper, or film.

Also in this case, the configuration may be such that the first and second elements are joined to the dielectric body by means of a vacuum laminate process.

Alternatively in this case, the configuration may be such that the first and second elements are joined to the dielectric body by using an adhesive.

The RFID tag antenna according to the present invention may also be configured such that the dielectric body is either of acrylonitrile butadiene styrene (ABS) resin or epoxy resin.

The RFID tag antenna according to the present invention may also be configured such that the conductor is either of copper, silver or aluminum.

A radio frequency identification (RFID) tag according to the present invention as noted above in which an integrated circuit (IC) chip is mounted onto a power feeding point of an RFID tag antenna is also included in the scope of the present invention.

**Advantageous Effects**

The present invention is contrived as described above, thereby bringing forth a benefit, as that of the present invention, of providing a miniaturized RFID tag usable even if it is adhesively attached to a metallic surface.

**Brief Description of the Drawings**

Fig. 1 is a diagram showing a configuration of an antenna in which each of a pair of conductors that is a first pattern individually has two turns of bent parts;
Fig. 2 is a diagram showing a configuration of an antenna in which each of a pair of conductors that is a first pattern individually has only one turn of bent part;
Fig. 3 is a diagram showing a first example of a configuration of an RFID tag antenna embodying the present invention;
Fig. 4 is a diagram showing a second example of a configuration of an RFID tag antenna embodying the present invention;
Fig. 5 is a diagram showing an equivalent circuit when an IC chip is connected to the power feeding point of the antenna shown in Fig. 3 or Fig. 4;
Fig. 6 is a diagram showing a third example of a configuration of an RFID tag antenna embodying the present invention;
Fig. 7 is a diagram showing a fourth example of a configuration of an RFID tag antenna embodying the present invention;
Fig. 8 is a diagram describing a first example of a production method of an RFID tag antenna embodying the present invention;
Fig. 9 is a diagram describing a second example of a production method of an RFID tag antenna embodying the present invention;
Fig. 10 is a diagram showing an equivalent circuit when an IC chip is connected to the power feeding point of an RFID antenna; and
Fig. 11 is a diagram exemplifying a folded dipole antenna to which an inductance unit is parallelly connected.

**Explanation of Reference**

1       First pattern
2       Second pattern
3       Dielectric body
4       Power feeding point
5       capacity coupling section
6       Second dielectric point
7       Sheet
8       Vacuum laminate
100     Folded dipole antenna

**Best Mode for Carrying Out the Invention**

The following is a description of the preferred embodiment of the present invention by referring to the accompanying drawings. The present embodiment is configured to provide an antenna (i.e., an RFID tag antenna) which has a longitudinal length smaller than that of the above-noted folded dipole antenna, which can make an area size of a face to be adhesively attached to an article no larger than the size of a credit card (i.e., 86 mm long and 54 mm wide, approximately), and which is usable for an RFID tag of a card form.

Note that what is considered in the following description is an RFID tag-use antenna which is connected to an IC chip represented by an equivalent circuit being constituted by a parallel circuit of Cc= 0.58 pF and Rc= 1200 ohm and which uses a signal of the frequency of 953 MHz. In this case, a setup of the inductance component La of the antenna at around 48nH constitutes the above described expression 1.

Note also that the following description shows a result of calculation based on a simulation carried out by using a commercially available magnetic field simulator.

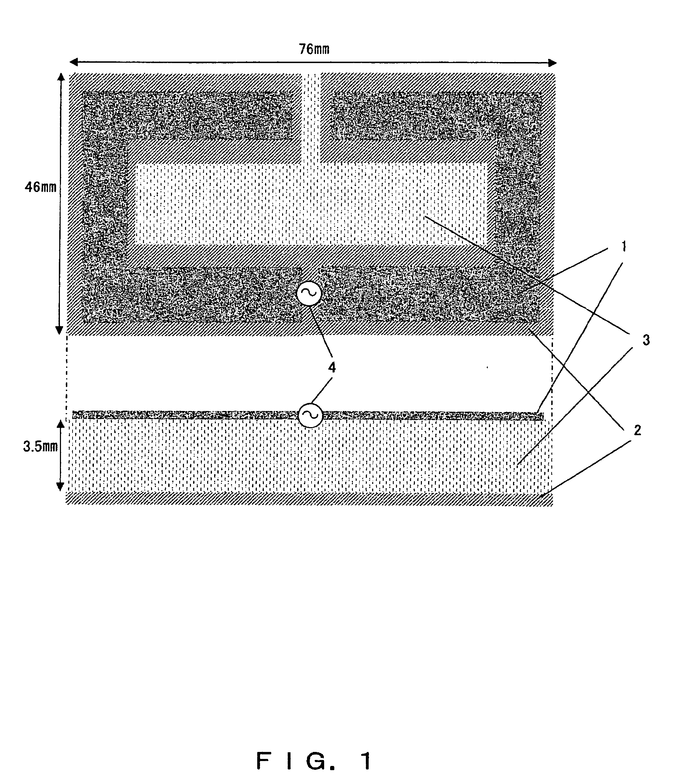

The first examined is an antenna as shown in Fig. 1.

Referring to Fig. 1, the first pattern 1 is constituted by a pair of conductors each having a u-shape and two turns of bent parts by contouring along the outer circumference form of a card by the size of 46 mm high and 76 mm wide. The IC chip is placed at the power feeding point 4 that is the edge part on one side of each of the pair of conductors.

The second pattern 2 is placed opposite to the first pattern 1 by sandwiching a dielectric body 3 of a thickness of 3.5 mm. The relative permittivity of the dielectric body 3 is set at εr= 3.0.

A calculation of the inductance component of the antenna finds La= 48nH (that is, the antenna possesses the inductance component because the overall length is longer than a half of wavelength), and therefore the resonance frequency of the antenna and IC chip can be determined to be f= 953 MHz based on the above described expression 1. A calculation result of the antenna gain finds a -11.9 dBi, thus resulting in generating a large loss. A conceivable reason is that a magnetic wave is hard to be emitted because there are two turns of bending in each conductor and also the bending is along the inside.

Accordingly, the number of turns of bending the first pattern is reduced so as to make the form of each of the pair of conductors as an L shape by making the rectangular bending only one turn. As a result, a calculation result of the antenna gain finds a 1.71 dBi. A calculation of the inductance component of the antenna finds La= 7.5nH which is too small to resonate in a desired frequency for an RFID tag antenna.

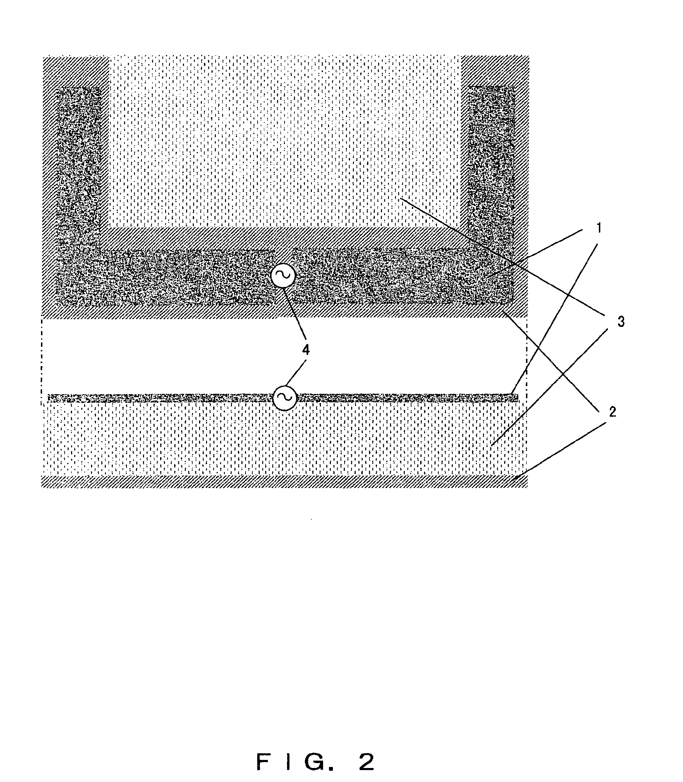

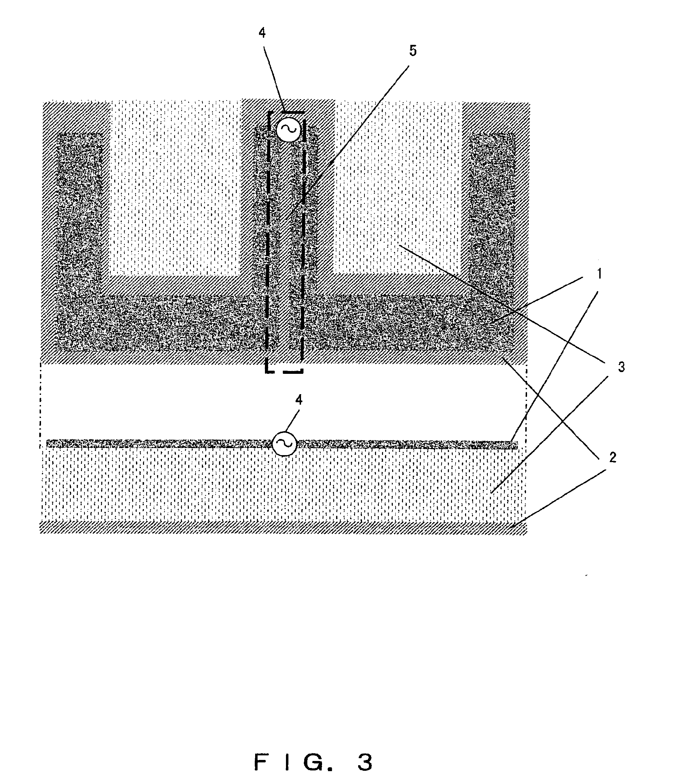

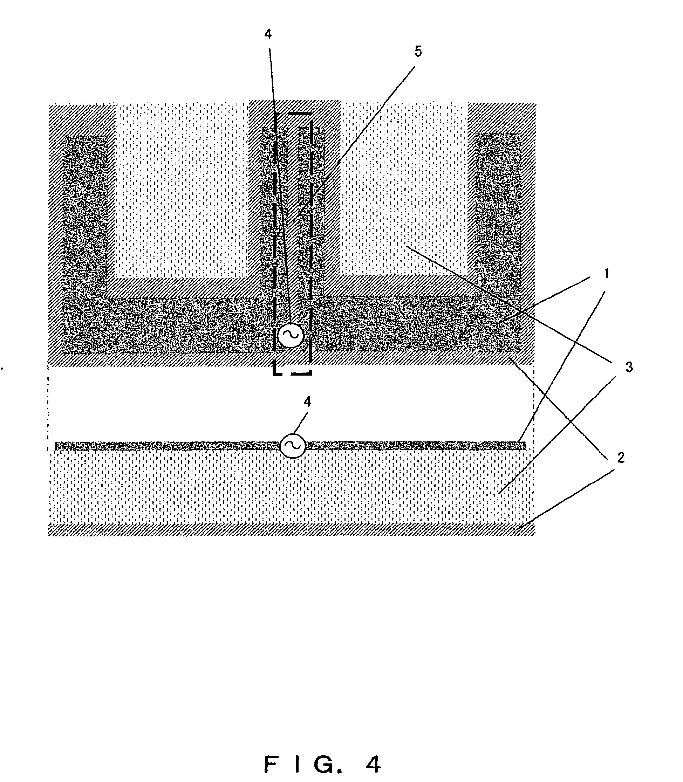

Further accordingly, a C (capacity) coupling section 5 is connected between the power feeding points 4 of the first pattern 1 as shown in Fig. 3. The C coupling section 5 is a result of extending the pair of conductors forming the first pattern 1 parallelly from the power feeding point 4. Note that the position of the power feeding point 4 is moved to the edge part of the parallel conductors in the configuration of Fig. 3; the power feeding point 4, however, is not necessarily to be moved to the position of Fig. 2, as shown in Fig. 4, because the C coupling section 5 may merely be inserted parallelly vis-à-vis the power feeding point 4.

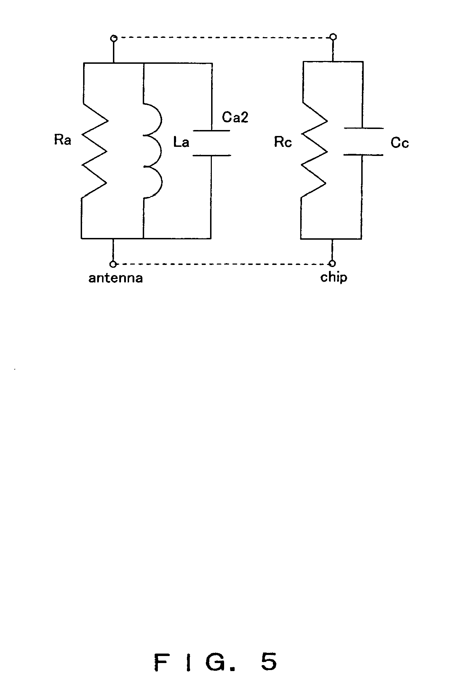

Fig. 5 is a diagram showing an equivalent circuit when an IC chip is connected to the power feeding point 4 of the antenna shown in Fig. 3 or Fig. 4. The equivalent circuit shown in Fig. 5 is a result of adding the capacitance component Ca2 of the C coupling section 5 in parallel to the inductance component La2 of an antenna (i.e., the antenna shown in Fig. 2) in a state of the C coupling section 5 not existing.

The calculation result of a value of the inductance component La2 for the configuration of Fig. 5 is 7.5nH as described above, and therefore the capacitance component Ca2 of the C coupling section 5 is to be merely set so as constitute the following expression 2:

$$[\text{Expression 2}]$$
$$La2(Cc + Ca2) \cong La \cdot Cc$$

in order to make the configuration of Fig. 3 or Fig. 4 possess an inductance component equivalent to La= 47.9nH.

Note that an antenna emission resistance Ra in this case is approximately Ra= 1000 to 1500 ohms. And a calculation result of the antenna gain finds a 1.35dBi, thus obtaining a practically sufficient gain.

As described above, a configuration of the antenna that is equipped with the first pattern 1 ,which is constituted by a pair of conductors each having only one turn of bent part and in which an edge part of one side of each of the pair of conductors is the power feeding point 4, the dielectric body 3, which is the size of 46 mm high and 76 mm wide and which is the thickness of 3.5 mm, and the second pattern 2 which is placed opposite to the first pattern 1 by sandwiching the dielectric body 3 and that the C coupling section 5 is formed in, and parallelly connected to, the power feeding point 4 in the configuration of Fig. 3, thereby making the antenna possess an inductance component necessary for a resonance with the IC chip and also a gain equivalent to that of a case of not having a C coupling section 5.

Note that the configurations of Figs. 3 and 4 make the second pattern 2 as a form by contouring along the first pattern 1. The second pattern 2 is for reducing a variation of the antenna characteristic in such a case of adhesively attaching the tag to a metallic surface; here, if a surface of the dielectric body 3 is made a solid coating with a conductor in place of the second pattern 2, however, a calculation result of the antenna gain finds a -5.8 dBi, thus being degraded greatly. Accordingly, the second pattern 2 is formed as contouring the form of the first pattern 1, e.g., the same form as of the first pattern, thereby making it possible to reduce a variation of the antenna characteristic in such a case of adhesively attaching to a metallic surface while securing a practical antenna gain.

The first and second patterns can be produced by processing a metal surface (e.g., copper, silver and aluminum), which has been formed by applying a vapor deposition or the like process to the top and bottom of the dielectric body for example, to a desired form by means of an etching or such.

And the dielectric body 3 prefers a use of material having flexibility and allowing a low cost and easy process, such as acrylonitrile butadiene styrene (ABS) resin and epoxy resin, in specific.

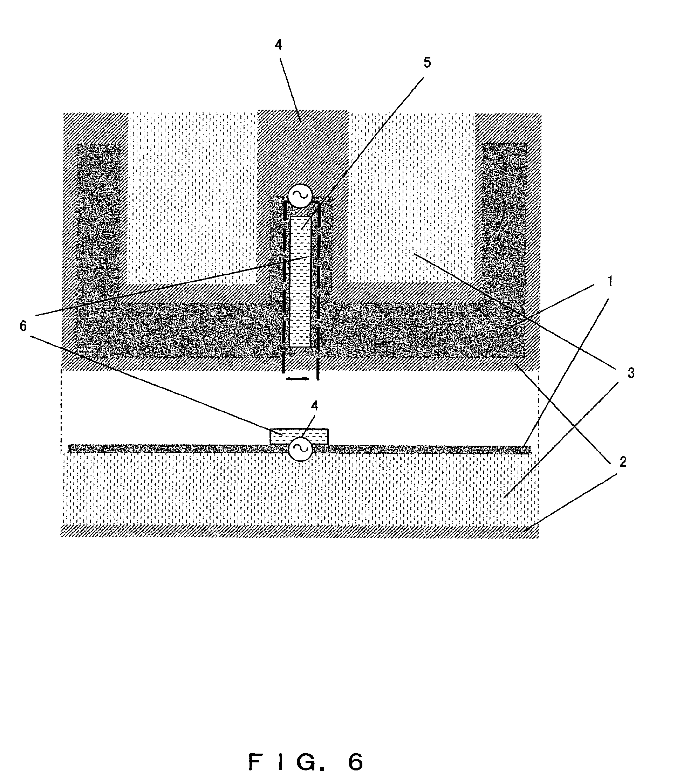

As shown in Fig. 6, an example of an alternative of the C coupling section 5 may be configured to place a second dielectric body 6 of a relative permittivity of $\varepsilon r = 5$ for example at a position opposite to the dielectric body 3 by sandwiching the parallel conductors forming the C coupling section 5 in Fig. 3, in place of configuring in low cost, only by placing the parallel conductors as shown in Figs. 3 and 4. This configuration makes it possible to shorten an overall length of the parallel conductors while securing a capacitance required for the C coupling section 5. Then, this configuration makes the antenna form further resemble the one shown in Fig. 2, thereby enabling an improvement of the antenna gain as that much.

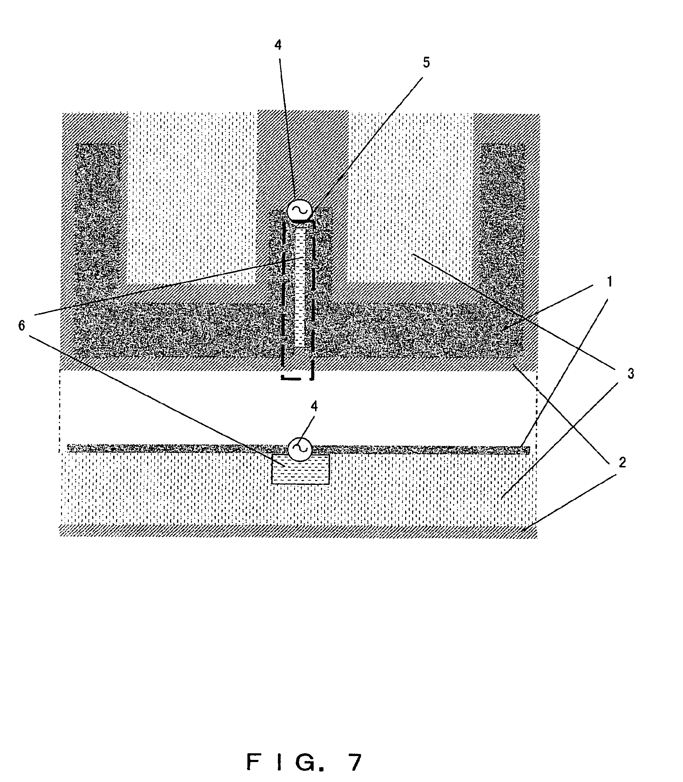

Note that, as shown in Fig. 7, the same benefit can also be obtained by placing the second dielectric body 6 of a higher permittivity than that of the dielectric body 3 at a part thereof contacting with the parallel conductors forming the C coupling section 5 in the configuration of Fig. 3, instead of placing the second dielectric body 6 as shown in Fig. 6.

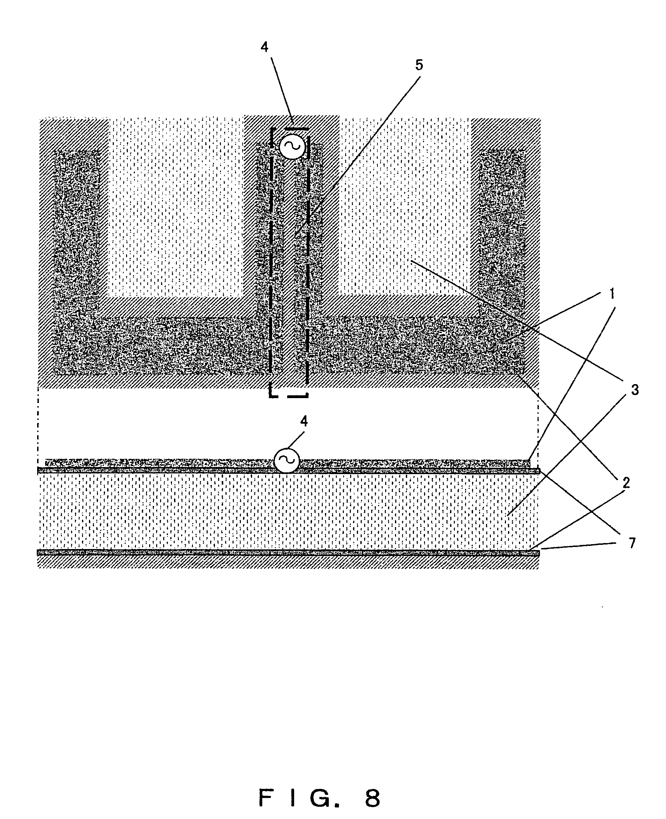

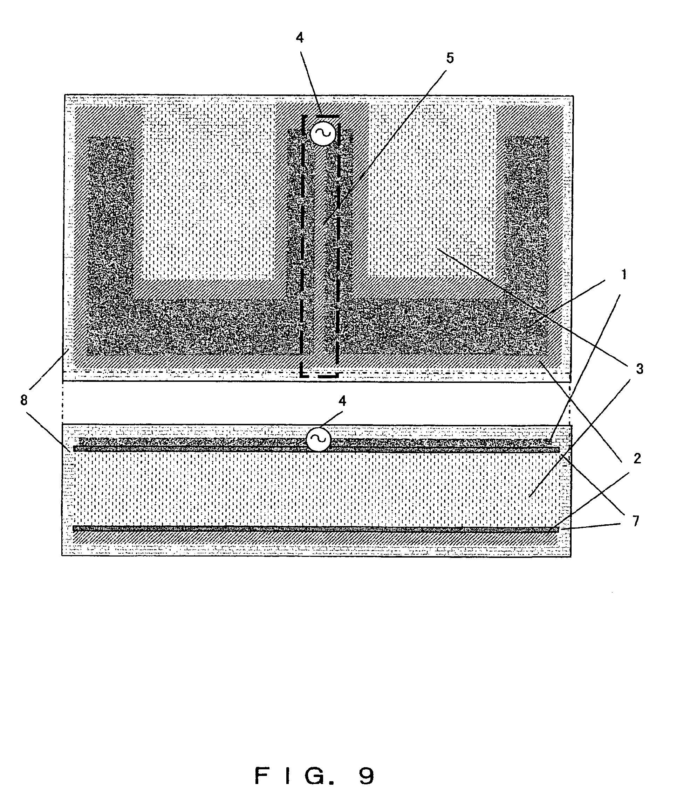

The antennas described so far can also be formed as an antenna by, for example, a three-sheet configuration by adding a sheet of the dielectric body 3 to two-sheet 7 which is respectively featured with the first pattern 1 and second pattern 2 in advance, which are conductors, of a sheet made of polyethylene terephthalate (PET), paper or film as shown in Fig. 8. In this case, the antenna may be produced by attaching these sheets 7 to the dielectric body 3 by using an adhesive for example, or the antenna may be produced by a process for integrating these sheets 7 and dielectric body 3 by sealing them with a vacuum laminate 8 as shown in Fig. 9.

Note here that the present invention can be improved and/or modified in various manners possible within the scope thereof, in lieu of being limited by the embodiments described above.

## Claims

1. A tag antenna suitable for use as a radio frequency identification (RFID) tag antenna, comprising:

   a first element (1) and a second element (2) formed so as to sandwich therebetween a dielectric body (3), the first element (1) being constituted by a pair of conductors each of which has a bent part having only one turn and in each of which one edge part is a power feeding point (4); and
   the second element being a conductor placed opposite to the first element;
   wherein the form of the said second element (2) is the same as that of the said first element (1), such that the second element (2) extends along the length of the first element (1)
   **characterised by**: a capacity coupling section (5) formed between the power feeding points (4); the second element having a line width greater than a line width of the first element (1).

2. The tag antenna according to claim 1, wherein a bending angle of said bent part is a right angle.

3. The tag antenna according to claim 1, wherein said capacity coupling section (5) comprises parallel conductors featured at a power feeding point (4) of said first element (1).

4. The tag antenna according to claim 3, further comprising
   a second dielectric body (6) placed opposite to said dielectric body (3) by sandwiching said parallel conductors.

5. The tag antenna according to claim 3, further comprising
   a second dielectric body (6) which is placed in a part of said dielectric body contacting with said parallel conductors and which has a higher relative permittivity than that of said dielectric body (3).

6. The tag antenna according to claim 1, wherein said first and second elements (1, 2) each comprise a conductor pattern formed on a sheet (7) and said dielectric body (3) of a sheet form is sandwiched by the sheets (7).

7. The tag antenna according to claim 6, wherein said sheet (7) is made of either of polyethylene terephthalate (PET), paper, or film.

8. The tag antenna according to claim 6, wherein said first and second elements (1, 2) are joined to said dielectric body (3) by means of a vacuum laminate process.

9. The tag antenna according to claim 6, wherein said first and second elements (1, 2) are joined to said dielectric body (3) by using an adhesive.

10. The tag antenna according to claim 1, wherein said dielectric body (3) is either of acrylonitrile butadiene styrene (ABS) resin or epoxy resin.

11. The tag antenna according to claim 1, wherein said conductor is either of copper, silver or aluminum.

12. A radio frequency identification (RFID) tag, wherein an integrated circuit (IC) chip is mounted onto a power feeding point (4) of a tag antenna according to any one of claims 1 through 11.

**Patentansprüche**

1. Etikettenantenne, die zur Verwendung als Funk-frequenzidentifikations-(RFID)-Etikettenantenne geeignet ist, umfassend:

   ein erstes Element (1) und ein zweites Element (2), die so gebildet sind, dass zwischen ihnen ein dielektrischer Körper (3) sandwichartig angeordnet ist, wobei das erste Element (1) aus einem Paar von Leitern gebildet ist, von denen jeder einen gebogenen Teil halt, der nur eine Biegung hat, und in denen jeweils ein Randteil ein Energiezuführungspunkt (4) ist; und
   das zweite Element ein Leiter ist, der gegenüber dem ersten Element platziert ist;
   bei der die Form des zweiten Elementes (2) dieselbe wie jene des ersten Elementes (1) ist, so dass sich das zweite Element (2) längs der Länge des ersten Elementes (1) erstreckt, **gekennzeichnet durch**:

   eine Kapazitätskopplungssektion (5), die zwischen den Energiezuführungspunkten (4) gebildet ist;
   wobei das zweite Element eine Leitungsbreite hat, die größer als eine Leitungsbreite des ersten Elementes (1) ist.

2. Etikettenantenne nach Anspruch 1, bei der ein Biegewinkel des gebogenen Teils ein rechter Winkel ist.

3. Etikettenantenne nach Anspruch 1, bei der die Kapazitätskopplungssektion (5) parallele Leiter umfasst, die an einem Energiezuführungspunkt (4) des ersten Elementes (1) angeordnet sind.

4. Etikettenantenne nach Anspruch 3, ferner mit einem zweiten dielektrischen Körper (6), der durch sandwichartiges Anordnen der parallelen Leiter gegenüber dem dielektrischen Körper (3) platziert ist.

5. Etikettenantenne nach Anspruch 3, ferner mit einem zweiten dielektrischen Körper (6), der in einem Teil des dielektrischen Körpers platziert ist, der mit den parallelen Leitern in Kontakt ist und eine höhere relative Permittivität als der dielektrische Körper (3) hat.

6. Etikettenantenne nach Anspruch 1, bei der die ersten und zweiten Elemente (1, 2) jeweils ein Leitermuster umfassen, das auf einem Blatt (7) gebildet ist, und der dielektrische Körper (3) in Blatt-Form durch die Blätter (7) sandwichartig angeordnet ist.

7. Etikettenantenne nach Anspruch 6, bei der das Blatt (7) entweder aus Polyethylenterephthalat (PET), Papier oder Film hergestellt ist.

8. Etikettenantenne nach Anspruch 6, bei der die ersten und zweiten Elemente (1, 2) mit dem dielektrischen Körper (3) durch einen Vakuumlaminierprozess verbunden sind.

9. Etikettenantenne nach Anspruch 6, bei der die ersten und zweiten Elemente (1, 2) mit dem dielektrischen Körper (3) unter Verwendung eines Klebstoffs verbunden sind.

10. Etikettenantenne nach Anspruch 1, bei der der dielektrische Körper (3) entweder aus Acrylnitril-Butadien-Styrol-(ABS)-Harz oder Epoxidharz ist.

11. Etikettenantenne nach Anspruch 1, bei der der Leiter entweder aus Kupfer, Silber oder Aluminium ist.

12. Funkfrequenzidentifikations-(RFID)-Etikett, bei dem ein Chip mit integrierter Schaltung (IC) auf einen Energiezuführungspunkt (4) einer Etikettenantenne nach einem der Ansprüche 1 bis 11 montiert ist.

**Revendications**

1. Antenne d'étiquette appropriée pour une utilisation en tant qu'antenne d'étiquette d'identification par radio fréquence (RFID), comportant :

   un premier élément (1) et un second élément (2) formés de manière à prendre en sandwich un corps diélectrique (3), le premier élément (1) étant constitué par une paire de conducteurs dont chacun possède une partie courbée présentant un seul tour et dans chacun desquels une partie de bord est un point d'alimentation en énergie (4) ; et

le second élément étant un conducteur placé en face du premier élément ;

dans lequel la forme dudit second élément (2) est la même que celle dudit premier élément (1), de sorte que le second élément (2) s'étend le long de la longueur du premier élément (1), le second élément possédant une largeur de ligne supérieure à une largeur de ligne du premier élément (1)

**caractérisée par** :

une section de couplage de capacité (5) formée entre les points d'alimentation en énergie (4).

**2.** Antenne d'étiquette selon la revendication 1, dans laquelle

un angle de courbure de ladite partie courbée est un angle droit.

**3.** Antenne d'étiquette selon la revendication 1, dans laquelle

ladite section de couplage de capacité (5) comporte des conducteurs parallèles prévus en un point d'alimentation en énergie (4) dudit premier élément (1).

**4.** Antenne d'étiquette selon la revendication 3, comportant en outre

un second corps diélectrique (6) placé en vis-à-vis dudit corps diélectrique (3) en prenant en sandwich lesdits conducteurs parallèles.

**5.** Antenne d'étiquette selon la revendication 3, comportant en outre

un second corps diélectrique (6) qui est placé dans une partie dudit corps diélectrique venant en contact desdits conducteurs parallèles et qui présente une permittivité relative plus élevée que celle dudit corps diélectrique (3).

**6.** Antenne d'étiquette selon la revendication 1, dans laquelle

lesdits premier et second éléments (1, 2) comportent chacun un motif conducteur formé sur une feuille (7) et ledit corps diélectrique (3) d'une feuille est pris en sandwich par les feuilles (7).

**7.** Antenne d'étiquette selon la revendication 6, dans laquelle

ladite feuille (7) est réalisée soit en téréphtalate de polyéthylène (PET), soit en papier, soit en film.

**8.** Antenne d'étiquette selon la revendication 6, dans laquelle

lesdits premier et second éléments (1, 2) sont réunis audit corps diélectrique (3) au moyen d'un processus de laminage sous vide.

**9.** Antenne d'étiquette selon la revendication 6, dans laquelle

lesdits premier et second éléments (1, 2) sont réunis audit corps diélectrique (3) en utilisant un adhésif.

**10.** Antenne d'étiquette selon la revendication 1, dans laquelle

ledit corps diélectrique (3) est l'une d'une résine d'acrylonitrile de butadiène styrène (ABS) ou d'une résine époxy.

**11.** Antenne d'étiquette selon la revendication 1, dans laquelle

ledit conducteur est soit du cuivre, soit de l'argent soit de l'aluminium.

**12.** Étiquette d'identification par radio fréquence (RFID), dans laquelle

une puce de circuit intégré (CI) est montée sur un point d'alimentation en énergie (4) d'une antenne d'étiquette selon l'une quelconque des revendications 1 à 11.

FIG. 1

F I G. 2

F I G. 3

F I G. 4

# F I G. 5

F I G. 6

F I G. 7

F I G. 8

FIG. 9

# F I G. 1 0

F I G. 1 1

**EP 1 895 620 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002298106 A
- US 20040021608 A